# EUROPEAN PATENT APPLICATION

(11) **EP 4 838 211 A2**
(43) Date of publication of application: **11.11.2026**
(21) Application number: 26198852.1
(22) Date of filing: 01.05.2023
(51) Int. Cl.: G01N 27/447

(54) **A SAMPLE WELL COMB MASK FOR PHOTOPOLYMERIZED ELECTROPHORETIC GELS**

(30) Priority: 10.05.2022 US 202263364441 P
(62) Document number(s) of the earlier application(s) in accordance with Art. 76 EPC: 23728229.8 / 4 508 425
(71) Applicant: EMD Millipore Corporation, Burlington, MA 01803 (US)
(72) Inventor: GREENIZEN, Kurt E, Burlington, MA 01803 (US); BAILEY, Trisha, Burlington, MA 01803 (US); AMARA, Ryan, Burlington, MA 01803 (US); LIBBY, Gerard, Burlington, MA 01803 (US); SYDLOWSKI, Paul, Burlington, MA 01803 (US); JIMENEZ, Mayra, Burlington, MA 01803 (US)
(74) Representative: Graham Watt & Co

(57) **Abstract**

The embodiments disclosed herein are directed to a masking device for enhancing the fidelity of sample wells of a photopolymerized electrophoretic gel contained in a gel casting assembly that comprises a comb having a one or more teeth. The masking device includes a light blocking agent fixedly located on the gel casting assembly where the light blocking agent overlaps with the teeth of the comb to prevent photopolymerization of a portion of an electrophoretic gel contained between the comb and the inner surfaces of the gel casting assembly. Upon removal of the comb after electrophoretic gel photopolymerization the sample wells remain uniform.

## Description

### CROSS-REFERENCE TO RELATED APPLICATIONS

This present application claims priority to U.S. Provisional Patent Application Ser. No. 63/364,441, filed on May 10, 2022, the disclosure of which is incorporated herein by reference in its entirety for all purposes.

### BACKGROUND

### Field of the Disclosure

The use of gel electrophoresis is currently the ubiquitous technique for the separation of biological materials. Nonbiological materials can also be separated using gels or other chromatographic supports as well, but the scope of effort with regard to biologicals is greater. Typical applications include separation of nucleic acid fragments of various sizes either in the context of sequence determination; in the detection of polymorphisms; or verification of sizes in other contexts. Also frequently conducted are separations of proteins, glycoproteins, protein fragments and application of gel separations as verification of homogeneity or purity, identification of post translational modifications and confirmation of molecular weight.

In all of these procedures, mixed samples of biological entities are applied to electrophoretic gels and the components are separated by application of an electric field across the gel. Regardless of the manner in which the gel is developed, the resulting pattern of migration of the substances contained in the sample must be detected in some manner. To conduct this detection after the gel is developed, the gel is stained by incubating the gel in the stain of choice for a period of time followed by a destaining process where the destaining composition is driven by the stain choice. The stained gel's protein bands are compared to a known protein ladder included as a sample on the gel to help determine the protein of interest's molecular weight. In some instances, additional information on the protein of interest is gained by further transfer of the protein of interest followed by immunodetection. Following the staining, typically the gel support is contacted with a blotting membrane to which the substances are transferred in the same pattern in which they appeared on the gel. The "spots" are then detected, at a minimum, by blocking the membrane with a protein or detergent solution to reduce non-specific binding (which otherwise leads to a high level of noise and low level of detection). Typical blocking agents include casein, bovine serum albumin (BSA), non-fat dry milk (generally about 1-5%) in a Tris buffer saline solution with TWEEN^{®} surfactant (TBS-T solution) or phosphate buffer saline solution with TWEEN^{®} surfactant (PBS-T solution). The biological entity is then incubated with an antibody specific for the antigen on the membrane. The membrane is then extensively washed to remove any contaminants, unbound blocking proteins or antibodies and the like. The membrane is then treated and incubated with a secondary enzyme-, radioisotope-, fluorfluor-, or biotin-conjugated antibody specific for the primary antibody. The membrane is extensively washed again to remove any unbound secondary antibody. Then a detection reagent, generally a chromogenic, chemiluminescent, fluorescent, radiological, or streptavidin-labeled material, is applied which either binds to, or is a substrate of the enzyme-conjugate. Lastly, the appropriate detection device is used to determine the presence, absence, position, quantity, etc. of the biological entity.

Systems for hand casting an electrophoresis gel are commercially available and generally encompass a variety of different approaches, including single, dual and multicast systems. Most hand cast systems require the user to set up the system by assembly of a series of variable sized glass plates with spacers appropriate to the thickness of the required gel that is to be cast (e.g., 0.75 mm, 1.0 mm and 1.5 mm). The desired gel thickness may be determined by the sample volume required for the electrophoresis process. The glass plates can be very fragile and subject to chipping and breakage during cleaning, handling and/or storage. Glass is the most common material for gel hand-casting because it provides an optimal reusable interface with the acrylamide for both gel polymerization and removal. Glass plates are also less susceptible to surface damage during cleaning than other materials such as plastic. Most non-reusable or disposable hand casting systems utilize treated plastics which can be advantageous as a release surface with the cast gels.

These systems are cumbersome to manage and require large numbers of components which must be aligned properly and loaded into a holder which mechanically compresses the glass plates together and forces the glass against a gasket or the like to prevent acrylamide from leaking out of the system and the cassette assembly. The gaskets used in these systems are of variable designs unique to the system being used. These gaskets or seals are exposed to the liquid acrylamide and often can become infused with the acrylamide, can be difficult to clean for subsequent uses, and can cause leaking issues. Loading the cassette components into the system requires precise alignment and users customarily test the assembly with deionized water to ensure there are not leaks prior to casting with acrylamide. The deionized water must be removed before casting. If leaks are detected, the assembly and cassette components must be adjusted, and the process repeated.

Once the system has been properly assembled, the first step in the casting process begins by injecting (usually by pipette) liquid acrylamide resolving gel into the cassette. In the single and dual systems, this requires the user to inject into what is a narrow opening at the top of each individual cassette. Multicast systems may allow the users to flood the entire stack simultaneously but produce an excess of acrylamide waste which must be cleaned after the process is completed.

Visibility into the cassette is important to achieve the desired height of the resolving gel which is advantageous in the single cassette systems but not achievable beyond the first couple of layers in a multicast system.

The second step in the casting process involves injecting the acrylamide stacking gel into each cassette, again usually by pipette. This also requires the user to inject into the narrow opening at the top of each individual cassette. Once the stacking gel has been introduced into the cassette, the user inserts a sample well comb matched to the gel thickness. To enable the comb to be inserted into the cassette, the comb teeth which form the sample wells are slightly thinner than the space between the glass plates which forms the desired gel thickness. The combs are constructed with a number of teeth to form wells, the number of which is based on sample size and desired well volumes (common configurations are 10, 12 and 15 wells). While inserting the comb, it is important for it to be centered from side to side with respect to the cassette and remain secure both during and after the stacking gel cures. It is also important that the comb can be removed (for electrophoresis sample loading) without disruption of the polymerized wells. Traditionally, any acrylamide solution occupying the space between the glass plates and the comb does not cure and is rinsed out after removing the comb before sample introduction for the electrophoresis process.

Acrylamide resolving and stacking gels often take 30-45 minutes to cure each depending on the reagents and their concentrations. As a result, modification of the reagents and concentrations has been demonstrated to allow for photopolymerization of the electrophoresis gels significantly cutting down on curing times for the user. However, when an acrylamide stacking gel is cured using photopolymerization, any stacking gel solution that may reside between the comb teeth and the glass may cure into a thin film within the wells, introducing variations into the sample wells from well to well and finished gel to gel as well as making it possible to damage the polymerized wells when removing the comb.

It would be desirable to provide a masking device, either reusable or a onetime use masking device, to a gel casting assembly during photoinitiated light curing of the gel which improves the process of photopolymerizing electrophoresis gels as well as the fidelity of the wells after photopolymerization.

It is therefore an object of embodiments disclosed herein to provide a component or device that is either external or internal to the gel casting assembly's fluid path and permanently attached or removably attached which provides a mask for sample well comb teeth and prevents any residual stacking solution between the inner glass surface and the comb teeth from curing during the light curing process.

It is another object of embodiments disclosed herein to provide improved fidelity and consistency of the gel sample wells.

It is yet another object of embodiments disclosed herein to intuitive interaction for curing a gel using a gel casting assembly.

These and other objects are achieved by the embodiments disclosed herein.

### SUMMARY

In accordance with certain embodiments, disclosed is a masking device for enhancing the fidelity of sample wells of a photopolymerized electrophoretic gel contained in a cassette frame of a gel casting assembly.

In one embodiment, a masking device for enhancing the fidelity of sample wells of a photopolymerized electrophoretic gel contained in a gel casting assembly that includes a comb having one or more comb teeth, the masking device including a light blocking agent fixedly located on the gel casting assembly, wherein the light blocking agent overlaps with the comb teeth to prevent photopolymerization of any portion of an electrophoretic gel contained between the comb teeth and the inner surfaces of the gel casting assembly, and where upon removal of the comb after photopolymerization of the electrophoretic gel, the sample wells remain uniform.

In certain embodiments, the light blocking agent includes one or more teeth that are configured to align the one or more comb teeth, and wherein the one or more teeth of the light blocking agent prevent photopolymerization of a portion of the electrophoretic gel contained between the comb teeth and the inner surfaces of the gel casting assembly.

In certain embodiments, the comb is removably located in or on the gel casting assembly.

In certain embodiments, the masking device is reusable.

In certain embodiments, the comb has 10, 12, or 15 teeth.

In certain embodiments, the masking device is sized to provide a friction fit with the gel cassette assembly.

In certain embodiments, the masking device further comprises a film attached to the gel cassette assembly for further inhibiting photopolymerization of the electrophoretic gel.

In certain embodiments, the masking device is attached to the gel cassette assembly by adhesive or electroadhesion.

In certain embodiments, the masking device is mechanically attached to the gel cassette assembly.

In certain embodiments, the film is made from a transparent or opaque material such as metal, cardboard, or plastic.

In another embodiment, disclosed is a masking device for enhancing the fidelity of sample wells of a photopolymerized electrophoretic gel comprising a light blocking device coupled to a gel casting assembly, wherein the light blocking device prevents any photopolymerization of a portion of the electrophoretic gel by preventing light from reaching an interior portion of the gel casting assembly.

In certain embodiments, the light blocking device blocks ultra-violet light.

In certain embodiments, the light blocking device is a light blocking film, a coating, or an etching on or in the gel casting assembly.

In some embodiments, the light blocking device is a polyester, acrylic, color filter film, or polarizing film.

In some embodiments, the light blocking device is a printed ultra-violet blocking epoxy mask.

In certain embodiments, the light blocking device is a vapor deposited optical coating.

In certain embodiments, the light blocking device is a laser or acid etched pattern.

In certain embodiments, the masking device has a comb with a plurality of comb teeth where the light blocking device blocks light from reaching the plurality of comb teeth.

In other embodiment, disclosed is a method of curing a photopolymerized electrophoretic gel comprising coupling a masking device to a gel casting assembly, injecting a liquid acrylamide resolving gel into the gel casting assembly, further injecting a photopolymerizable acrylamide stacking gel into the gel casting assembly on top of the resolving gel, curing the resolving gel and stacking gel using photopolymerization, and wherein the masking device prevents photopolymerization of the stacking gel inside a portion of the gel casting assembly in order to enhance a fidelity of sample wells of the photopolymerized electrophoretic gel in the gel casting assembly..

In certain embodiments, methods further comprise locating the masking device on the outside of the gel casting assembly.

In certain embodiments, methods further comprise locating the masking device within the gel casting assembly.

### BRIEF DESCRIPTION OF THE DRAWINGS

The apparatuses, assemblies, devices, and components presented herein may be better understood with reference to the following drawings and description. It should be understood that some elements in the figures may not necessarily be to scale and that emphasis has been placed upon illustrating the principles disclosed herein. In the figures, like-referenced numerals designate corresponding and/or comparable components/elements throughout the different views.
FIG. 1 illustrates a perspective view of a gel casting assembly in accordance with an example embodiment of the present disclosure, the gel casting assembly having an inserted comb and a masking device attached to the outside of the gel casting assembly.
FIG. 2 illustrates an exploded view of the gel casting assembly illustrated in FIG. 2, where the masking device is attached to the gel casting assembly.
FIG. 3 illustrates a perspective view of a gel casting assembly in accordance with a second example embodiment of the present disclosure, the gel casting assembly having an inserted comb and a removable masking device attached to the outside of the gel casting assembly.
FIG. 4 illustrates an exploded view of the gel casting assembly illustrated in FIG. 3.
FIG. 5 illustrates a perspective view of the masking device illustrated in FIGS. 1 and 2, and in accordance with the first embodiment of the disclosure.
FIG. 6 illustrates an isolated perspective view of the molded clip-on masking device illustrated in FIGS. 3 and 4, and in accordance with the second embodiment of the present disclosure.
FIG. 7 illustrates a perspective view of another embodiment of a formed clip-on masking device in accordance with the present disclosure.
FIG. 8 illustrates a perspective view of an example embodiment of a comb holder clip-on masking device in accordance with the present disclosure.
FIG. 9 illustrates a flowchart of a method for curing a photopolymerized electrophoretic gel with a masking device and in accordance with the present disclosure.

### DETAILED DESCRIPTION

In the following detailed description, reference is made to the accompanying figures which form a part hereof wherein like numerals designate like parts throughout, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense, and the scope of embodiments is defined by the appended claims and their equivalents.

Aspects of the disclosure are disclosed in the description herein. Alternate embodiments of the present disclosure and their equivalents may be devised without parting from the spirit or scope of the present disclosure. It should be noted that any discussion herein regarding "one embodiment," "an embodiment," "an exemplary embodiment," and the like indicate that the embodiment described may include a particular feature, structure, or characteristic, and that such particular feature, structure, or characteristic may not necessarily be included in every embodiment. In addition, references to the foregoing do not necessarily comprise a reference to the same embodiment. Finally, irrespective of whether it is explicitly described, one of ordinary skill in the art would readily appreciate that each of the particular features, structures, or characteristics of the given embodiments may be utilized in connection or combination with those of any other embodiment discussed herein.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The terms "comprising," "including," "having," and the like, as used with respect to embodiments of the present disclosure, are synonymous.

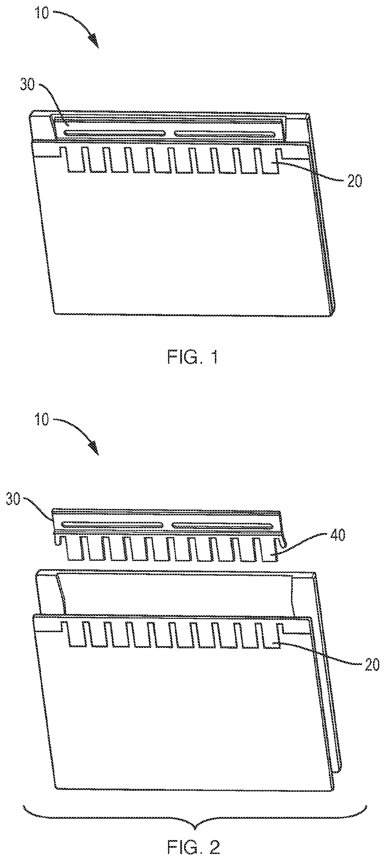

Turning now to FIGS. 1 and 2, there is shown a gel casting assembly 10 with a masking device 20 and a comb 30 containing teeth 40 in accordance with certain embodiments. The masking device 20 and the comb 30 may be constructed of one or more molded pieces chemically compatible with gel casting solutions. In certain embodiments, the masking device 20 may be permanently attached to the gel casting assembly 10, while in other embodiments, the masking device 20 may be removably coupled to the gel casting assembly 10.

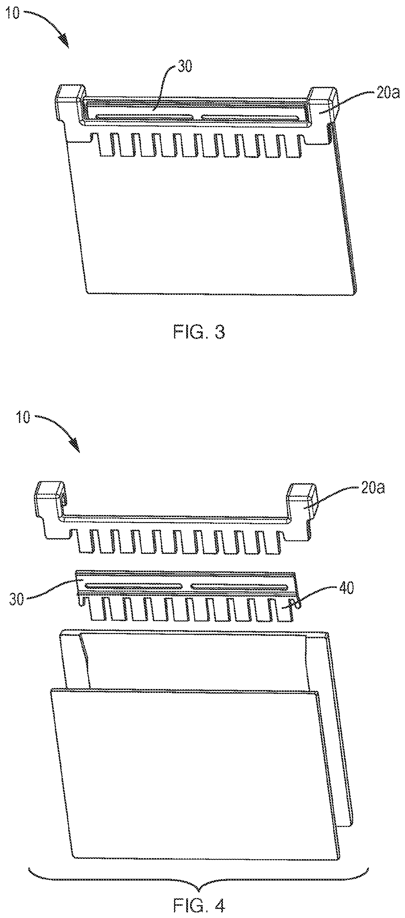

Turning now to FIGS. 3 and 4, there is shown a gel casting assembly 10 with a masking device 20a and a comb 30 containing teeth 40 in accordance with certain embodiments. The masking device 20a and the comb 30 may be constructed of one or more molded pieces chemically compatible with gel casting solutions. In certain embodiments, the masking device 20a is removably attached to the gel casting assembly 10.

In any of the embodiments show in FIGS. 1, 2, 3, or 4, the masking device 20 may be located on the outside of the gel casting assembly 10 or contained within the gel casting assembly 10 in direct contact with the photopolymerized electrophoretic gel held inside the gel casting assembly 10. Furthermore, the masking devices 20, 20a are sized in such a manner that they correspond with the comb 30 and have the same shape as the comb teeth 40 within or on the gel casting assembly 10 such that photopolymerizing light cannot pass through the masking devices 20, 20a to interact with a portion of the electrophoretic gel and thus prevent the electrophoretic gel located behind the masking devices 20, 20a from photopolymerizing. This allows for uniform wells of the electrophoretic gels to be polymerized so that when the comb 30 is removed the gel casting assembly 10, the resulting gel will not deform or tear, which, if occurred, would render the gel unusable.

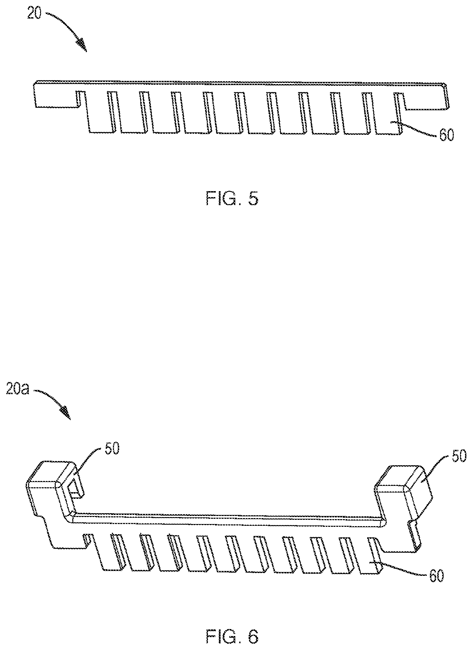

Turning to FIG. 5, illustrated is a perspective view of the masking device 20 illustrated in FIGS. 1 and 2. The masking device 20 may be constructed as a flat shape, and may be fixedly attached on the inside or the outside of the gel casting assembly 10 using an adhesive or electroadhesion. As with other embodiments, the masking device 20 as shown in FIG. 5 may have one or more teeth 60 to match the tooth configuration of the comb 30. The masking device 20 illustrated in FIG. 5 may be constructed of any material that is configured to prevent light from photopolymerizing the gel, such as, but not limited to, metal, paper, or plastic. In some embodiments, the masking device 20 may be constructed such that a user can see through the masking device 20 (i.e., the masking device 20a may be at least partially transparent) in order to ensure the user has visual confirmation when pouring gel into well areas between the teeth 40 of the gel casting assembly 10. According to certain embodiments, the masking device 20 illustrated in FIG. 5 may be screen printed onto the gel casting assembly 10. In accordance with other embodiments, the masking device 20 may be acid etched or laser etched onto the gel casting assembly 10. According to even further embodiments, the masking device 20 may be a stick-on vinyl masking device.

As illustrated in FIG. 6, the second embodiment of the masking device 20a may be made of a molded component or assembly that is capable of clipping onto or sliding onto the top of the gel casting assembly 10, like that illustrated in FIGS. 3 and 4, by means of attachment points 50. The masking device 20a may have one or more teeth 60 and preferably 10 teeth, 12 teeth, or 15 teeth to match the tooth configuration of the comb 30. The masking device 20a illustrated in FIG. 6 may be made of any material that is configured to prevent light from photopolymerizing the gel such as, but not limited to, metal, paper, or plastic. In some embodiments, the masking device 20a may be constructed such that a user can see through the masking device 20a (i.e., the masking device 20a may be at least partially transparent) in order to ensure the user has visual confirmation of the alignment between the masking device 20a and the comb 30 of the gel casting assembly 10.

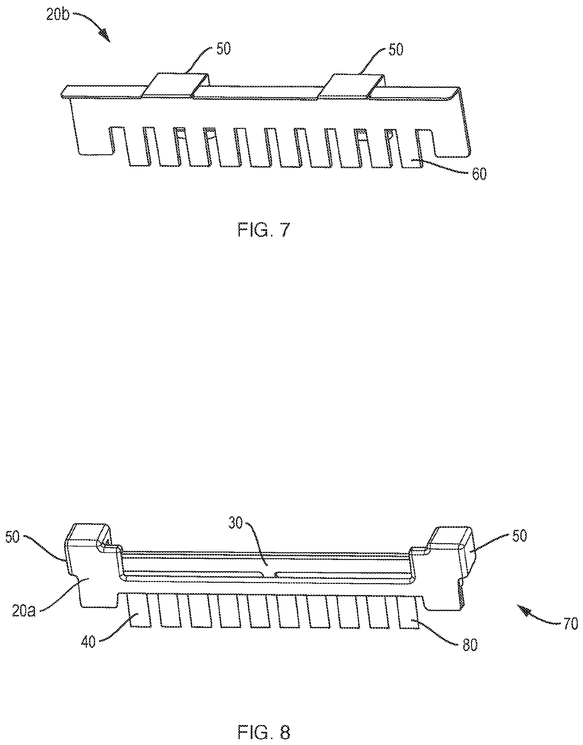

FIG. 7 shows another embodiment of the masking device 20b which may be constructed from a flat shape, and is capable of folding in portions so that the attachment points 50 be folded into place allowing the masking device 20b to be clipped onto or slide onto the top of the gel casting assembly 10. As with other embodiments, the masking device 20b as shown in FIG. 7 can have one or more teeth 60 to match the tooth configuration of the comb 30. The masking device 20b in FIG. 7 may be made of any material that is configured to prevent light from photopolymerizing the gel, such as, but not limited to, metal, paper, or plastic. In some embodiments, the masking device 20b may be constructed such that a user can see through the masking device 20b (i.e., the masking device 20a may be at least partially transparent) in order to ensure the user has visual confirmation of the alignment between the masking device 20b and the comb 30 of the gel casting assembly 10. In addition, when the masking device 20b is at least partially transparent, the user can see where to pour gel in the well areas between the teeth 40 of the gel casting assembly 10.

Turning to FIG. 8, illustrated is another embodiment of a masking device 70, where the masking device 70 may be formed by combining of the masking device 20b and the comb 30 of the gel casting assembly 10 into one unit. The masking device 70 may be made of a single or multi-piece molded assembly that can clip onto or slide onto the top of the gel casting assembly 10 of FIGS. 3 and 4 by means of attachment points 50. The masking device 70 may have one or more teeth 80 and preferably 10 teeth, 12 teeth, or 15 teeth. The masking device 70 illustrated in FIG. 8 may be constructed of any material that is configured to prevent light from photopolymerizing the gel, such as, but not limited to, metal, paper, or plastic. **In** some embodiments, the masking device 70 may be constructed such that a user can see through the masking device 70 (i.e., the masking device 70 is at least partially transparent) in order to ensure the user has visual confirmation of the teeth 80 when pouring the gel into gel casting assembly 10.

As shown in FIGS. 1 through 8, the comb 30 is operably associating with a gel casting assembly 10 for forming sample wells in the electrophoretic separation medium in accordance with certain embodiments. **In** the embodiments shown, the comb 30 includes a plurality of spaced fingers or teeth 40. There are ten teeth 30 in the embodiment shown in FIGS. 2, 4, and 8, although those skilled in the art will appreciate that more or fewer teeth 30 may be suitable, depending upon the number of sample wells desired to be formed in the electrophoretic separation medium. Preferably each of the teeth 30 extends from the body of the comb 30 in the same direction and to the same extent, is of the same size and shape (generally rectangular), and terminates in a free end. Proper positioning of the comb 30 into the gel casting assembly 10 results in the teeth 30 extending into the electrophoretic gel, which enables the formation of tooth-shaped wells in the electrophoretic gel to form well shapes matching the shape of the teeth 40. That is, upon photopolymerization of the medium, the teeth 40 serve to occupy regions that the medium would otherwise occupy, so that upon photopolymerization of the medium and subsequent removal of the comb 30, regions devoid of photopolymerized medium remain and define the wells for introduction of a sample to be subjected to electrophoresis. The comb 30 is sized to provide a friction fit within the gel casting assembly 10 so that the user can insert the comb 30 into the gel casting assembly 10 in a matter that provide the least amount of gel material from being trapped between the comb 30 and the interior walls of the gel casting assembly 10. Suitable materials of construction for the comb 30 include those compatible with gel casting solutions such as, but not limited to, polycarbonate plastics, glass, and/or paper. As previously explained, the masking devices 20, 20a, 20b, 70 may be constructed from any material that is configured to prevent light from passing through the masking device 20 and photopolymerizing the electrophoretic gel. The masking devices 20, 20a, 20b, 70 may be constructed of an ultra-violet blocking ("UV") polyester, a UV blocking acrylic, a UV blocking color filter film, or a polarizing film of any material that prevents the photopolymerizing of the electrophoretic gel. It should be obvious to one skilled in the art that the masking device 20, 20a, 20b, 70 can be constructed in such a manner that any wavelength light including light in the visible spectrum can be prevented from passing through the masking device 20, 20a, 20b, 70 should that light be capable of photopolymerizing the electrophoretic gel. Further, the masking device 20, 20a, 20b, 70 may be constructed of a UV blocking epoxy mask which could be attached to the gel casting assembly 10, printed directly onto the gel casting assembly 10, or, in other embodiments, printed directly onto the comb 30. In these embodiments, the masking device 20, 20a, 20b, 70 is sized to provide a friction fit with the gel casting assembly 10 and/or the comb 30. The masking device 20 illustrated in FIGS. 1, 2, and 5 may be constructed further of an optical coating attached to the gel casting device 10, for example, a vapor deposited optical coating. Additionally, the masking device 20 illustrated in FIGS. 1, 2, and 5 may be an etched pattern on the gel casting device 10, such as, but not limited to, a photo or laser etched pattern matching the comb 30 or an acid etch on the gel casting assembly 10 to match the tooth 40 configuration of the comb 30.

The masking device 20, 20a, 20b, 70 of FIGS. 1 through 8 may be made a permanent portion of the gel casting assembly 10, or may be made to be reusable with other gel casting assemblies 10.

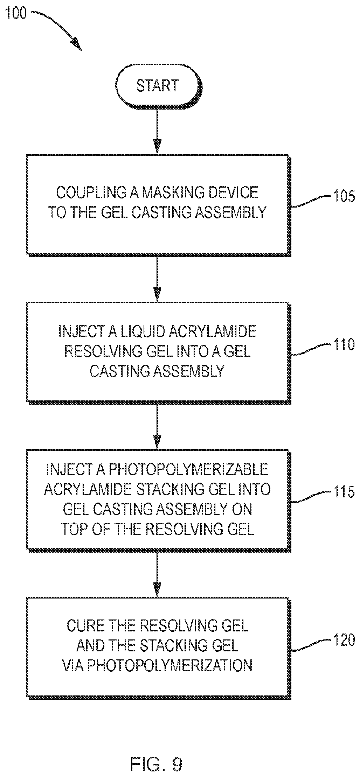

Turning to FIG. 9, illustrated is a method 100 for utilizing one of the embodiments of the masking device 20, 20a, 20b, 70 disclosed above. At step 105, the masking device 20, 20a, 20b, 70 may be coupled to a gel casting assembly 10. The gel casting assembly 10 may include a comb 30, as previously explained, that is operably associated with a gel casting assembly 10 for forming sample wells in the electrophoretic separation medium in accordance with certain embodiments. The masking device 20, 20a, 20b, 70 may be coupled to the gel casting assembly 10 via any of the methods or attaching means explained above. At step 110, a liquid acrylamide resolving gel may be injected into the gel casting assembly 10. Then, at step 115, a photopolymerizable acrylamide stacking gel may be injected into the gel casting assembly 10 on top of the resolving gel. At step 120, the resolving gel and the stacking gel may be cured via photopolymerization. With the masking device 20, 20a, 20b, 70 being coupled to the gel casting assembly 10, the masking device 20, 20a, 20b, 70 prevents photopolymerization of a portion of the stacking gel disposed inside a portion of the gel casting assembly 10, and, specifically, the portion of the stacking gel disposed between the gel casting assembly 10 and the comb teeth of the comb 30.

While the masking devices presented herein have been illustrated and described in detail and with reference to specific embodiments thereof, it is nevertheless not intended to be limited to the details shown, since it will be apparent that various modifications and structural changes may be made therein without departing from the scope of the inventions and within the scope and range of equivalents of the claims.

In addition, various features from one of the embodiments may be incorporated into another of the embodiments. That is, it is believed that the disclosure set forth above encompasses multiple distinct inventions with independent utility. While each of these inventions has been disclosed in a preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions, and/or properties disclosed herein. Accordingly, it is appropriate that the appended claims be construed broadly and in a manner consistent with the scope of the disclosure as set forth in the following claims.

It is also to be understood that terms such as "left," "right," "top," "bottom," "front," "rear," "side," "height," "length," "width," "upper," "lower," "interior," "exterior," "inner," "outer" and the like as may be used herein, merely describe points of reference and do not limit the present invention to any particular orientation or configuration. Further, the term "exemplary" is used herein to describe an example or illustration. Any embodiment described herein as exemplary is not to be construed as a preferred or advantageous embodiment, but rather as one example or illustration of a possible embodiment of the invention. Additionally, it is also to be understood that the components of the gel casting assembly described herein, the masking device described herein, and/or portions thereof may be fabricated from any suitable material or combination of materials, such as, but not limited to, thermoplastics, plastics, or metals (e.g., copper, bronze, aluminum, steel, etc.), as well as derivatives thereof, and combinations thereof. In addition, it is further to be understood that the steps of the methods described herein may be performed in any order or in any suitable manner.

Finally, when used herein, the term "comprises" and its derivations (such as "comprising," etc.) should not be understood in an excluding sense, that is, these terms should not be interpreted as excluding the possibility that what is described and defined may include further elements, steps, etc. Similarly, where any description recites "a" or "a first" element or the equivalent thereof, such disclosure should be understood to include incorporation of one or more such elements, neither requiring nor excluding two or more such elements. Meanwhile, when used herein, the term "approximately" and terms of its family (such as "approximate," etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about," "around," "generally," and "substantially." Embodiments of the invention may include the features of the following enumerated paragraphs ("paras").
1. A masking device for enhancing a fidelity of sample wells of a photopolymerized electrophoretic gel contained in a gel casting assembly that includes a comb having one or more comb teeth, the masking device comprising:
   a light blocking agent coupled to the gel casting assembly;
   wherein the light blocking agent overlaps with the comb teeth to prevent photopolymerization of any portion of an electrophoretic gel contained between the comb teeth and an inner surfaces of the gel casting assembly; and
   where upon removal of the comb after photopolymerization of the electrophoretic gel, the sample wells remain uniform.
2. The masking device according to para 1, wherein the light blocking agent includes one or more teeth that are configured to align the one or more comb teeth, and wherein the one or more teeth of the light blocking agent prevent photopolymerization of a portion of the electrophoretic gel contained between the comb teeth and the inner surfaces of the gel casting assembly.
3. The masking device according to para 1 or 2, wherein the comb is removably located in or on the gel casting assembly.
4. The masking device of para 1 or 2, wherein the masking device is reusable.
5. The masking device of para 1 or 2, wherein the comb has 10, 12, or 15 teeth.
6. The masking device of para 1 or 2, wherein the masking device is sized to provide a friction fit with the gel casting assembly.
7. The masking device of para 6, wherein the masking device adheres to an outer surface of the gel casting assembly via an adhesive or electroadhesion.
8. The masking device of para 6, wherein the masking device mechanically adheres to an outside of the gel casting assembly.
9. The masking device of para 6, wherein the masking device is made from a transparent or opaque material.
10. A masking device for enhancing a fidelity of sample wells of a photopolymerized electrophoretic gel, comprising:
   a light blocking device coupleable to a gel casting assembly;
   wherein the light blocking device prevents photopolymerization of a portion of the electrophoretic gel by preventing light from reaching an interior portion of the gel casting assembly.
11. The masking device of para 10, wherein the light blocking device blocks ultra-violet light.
12. The masking device of para 11, where the light blocking device is a light blocking film, a coating, or an etching on or in the gel casting assembly.
13. The masking device of para 12, wherein the light blocking film is a light blocking polyester, acrylic, color filter film, or polarizing film.
14. The masking device of para 13, wherein the light blocking film is a printed light blocking epoxy mask.
15. The masking device of para 12, wherein the light blocking device is a vapor deposited optical coating.
16. The masking device of para 10, wherein the light blocking device is a laser or acid etched pattern.
17. The masking device of para 10, further comprising a comb having a plurality of comb teeth, wherein the light blocking device blocks light from reaching the plurality of comb teeth.
18. A method of curing a photopolymerized electrophoretic gel comprising:
   coupling a masking device to a gel casting assembly;
   injecting a liquid acrylamide resolving gel into the gel casting assembly;
   further injecting a photopolymerizable acrylamide stacking gel into gel casting assembly on top of the resolving gel;
   curing the resolving gel and the stacking gel via photopolymerization means;
      and
   wherein the masking device prevents photopolymerization of the stacking gel inside a portion of the gel casting assembly in order to enhance a fidelity of sample wells of the photopolymerized electrophoretic gel in the gel casting assembly.
19. The method of para 18, wherein the masking device is located on an outer surface of the gel casting assembly.
20. The method of para 18, wherein the masking device is located within the gel casting assembly.

## Claims

1. A masking device (20) for enhancing a fidelity of sample wells of a photopolymerized electrophoretic gel contained in a gel casting assembly (10) that includes a comb (30) having one or more comb teeth (40), the masking device comprising:
a light blocking device patterned to include a plurality of spaced teeth (60).

2. The masking device of claim 1, wherein the teeth (60) are spaced fingers.

3. The masking device of claim 1 or claim 2, wherein each of the teeth (60) extends from a body in the same direction and to the same extent, is of the same size and generally rectangular shape, and terminates in a free end.

4. The masking device (20) of any one of claims 1 to 3, wherein, in use, the light blocking device blocks ultraviolet light to prevent photopolymerization of a portion of electrophoretic gel by preventing light from reaching an interior portion of a gel casting assembly (10).

5. The masking device (20) of any one of claims 1 to 4, constructed from a flat shape and further comprises attachment points (50) that can be folded into place to allow the masking device (20b) to be clipped onto or slide onto the top of a gel casting assembly (10).

6. The masking device (20) of any one of claims 1 to 4, wherein the masking device (20a) is made of a molded component and comprises attachment points (50) to clip onto or slide onto the top of a gel casting assembly (10).

7. The masking device of claim 6, wherein the masking device (20a) is chemically compatible with gel casting solutions.

8. The masking device (70) of any one of claims 1 to 4, further comprising a comb (30) such that the masking device (70) and the comb (20) form one unit.

9. The masking device (70) of claim 8, wherein the configuration of the teeth of the masking device (20) and the comb (30) match.

10. The masking device (20) of any one of claims 1 to 4, wherein the masking device (20) is a stick-on vinyl masking device.

11. The masking device (20) of any previous claim, wherein the masking device (20) is partially transparent, such that a user can see through it.

12. A gel casting device (10) screen printed, acid etched or laser etched with a masking device (20) according to any one of claims 1 to 4.
